# EUROPÄISCHE PATENTSCHRIFT

(11) **EP 0 638 948 B1**
(45) Veröffentlichungstag und Bekanntmachung des Hinweises auf die Patenterteilung: **16.04.1997**
(21) Anmeldenummer: 94250193.3
(22) Anmeldetag: 28.07.1994
(51) Int. Cl.: H01M 4/88, C25B 11/03

(54) **Verfahren zur Herstellung katalytisch wirksamer Gasdiffusionselektroden**
Method of making a catalytically active gas diffusion electrode
Procédé pour la fabrication d'une électrode catalytiquement active à diffusion gazeuse

(30) Priorität: 13.08.1993 DE 4327254
(43) Veröffentlichungstag der Anmeldung: 15.02.1995
(73) Patentinhaber: Compur Monitors Sensor Technology GmbH, D-81539 München (DE)
(72) Erfinder: Risse, Friedhelm, Dr., D-50739 Köln (DE)
(74) Vertreter: Geyer, Ulrich F., Dr. Dipl.-Phys.

(56) Entgegenhaltungen:
- US-A- 3 692 087
- US-A- 4 185 131
- US-A- 4 328 080
- US-A- 4 395 322
- PATENT ABSTRACTS OF JAPAN vol. 17, no. 307 (E-1379) 11. Juni 1993 & JP-A-05 029 005 (HONDA MOTOR CO LTD) 5. Februar 1993
- DATABASE WPI Week 8918, Derwent Publications Ltd., London, GB; AN 89-132633 & JP-A-1 075 532 (NIPPON TELEG & TELEPH) 22. März 1989
- PATENT ABSTRACTS OF JAPAN vol. 15, no. 248 (C-0843) 25. Juni 1991 & JP-A-03 079 783 (MITSUBISHI ELECTRIC CORP) 4. April 1991

## Beschreibung

Die Erfindung betrifft ein Verfahren zur Herstellung katalytisch wirksamer Gasdiffusionselektroden für elektrochemische Zellen, bei dem eine gasdurchlässige Membran mit einem Katalysator beschichtet wird.

Bei elektrochemischen Gassensoren für den Umwelt- und Arbeitsschutz werden katalysatorbeschichtete Gasdiffusionselektroden zur quantitativen elektrochemischen Umsetzung und damit zur Messung von Gasspuren im PPM- und PPB-Bereich in großen Stückzahlen eingesetzt. Das Elektrodenmaterial und der Elektrolyt müssen im Hinblick auf die zu messende Gaskomponente spezifisch gewählt werden. Um möglichst viele Gase mit einem einzigen tragbaren Gerät zu erfassen, ist man bestrebt, die Elektrolytvolumina der Sensoren und die Elektrodenflächen zu reduzieren.

Es ist bekannt Elektroden für elektrochemische Sensoren auf mechanischem. elektrochemischem oder chemischem Wege herzusstellen. Alle bisher bekannten Methoden haben jedoch den Nachteil, daß sie zu arbeitsintensiv sind und zu einer großen nicht mehr tolerierbaren Exemplarstreuung hinsichtlich der Sensorspezifikationen (Empfindlichkeit, Temperaturabhängigkeit, Alterungsbeständigkeit etc.) führen. Außerdem läßt es sich nicht vermeiden, daß ein zu großer Anteil von dem teueren Katalysatormaterial bei der Herstellung der Elektroden verloren geht.

Der Erfindung liegt die Aufgabe zugrunde,ein Verfahren zur Herstellung katalytisch wirksamer Gasdiffusionselektroden zu entwickeln, das eine hohe Reproduzierbarkeit und eine sehr gute Homogenität der Katalysatorbeschichtung gewährleistet. Außerdem soll das Verfahren im Hinblick auf eine Automatisierung mit einem möglichst geringen Arbeitsaufwand realisiert werden können und auch zur Herstellung von Gasdiffusionselektroden mit unterschiedlich beschichteten Katalysatorfeldern geeignet sein.

Diese Aufgabe wird erfindungsgemäß dadurch gelöst, daß
a) die Membran mit einer Strukturierungsmaske (1) abgedeckt wird, die entsprechend den vorgesehenen Elektrodenflächen mit Aussparungen (2, 3, 4) versehen ist
b) durch Verdampfung oder Kathodenzerstäubung (Sputtern) einer leitfähigen Substanz im Vakuum ein entsprechend den Aussparungen (2, 3, 4) strukturiertes leitfähiges Elektodenmuster auf der Membran erzeugt wird,
c) das leitfähige Elektodenmuster auf der Membran galvanisch mit dem Katalysator beschichtet wird und
d) das galvanisch abgeschiedene, katalytisch wirksame Elektrodenmuster anschließend hydrophobisiert wird.

Vorzugsweise erfolgt die Hydrophobisierung des katalytisch wirksamen Schichtmusters durch Auftragen und anschließendes Trocknen einer Polymerdispersion.

Gemäß einer Weiterentwicklung werden verschiedene Teilelektrodenflächen des Elektrodenmusters mit verschiedenen Katalysatoren galvanisch beschichtet.

Das erfindungsgemäße Verfahren ermöglicht eine kostengünstige Massenfertigung von Gasdiffusionselektroden mit hoher Reproduzierbarkeit. Dabei kann, verglichen mit den herkömmlichen Verfahren, der Verbrauch an Katalysatormaterial erheblich reduziert werden. Ferner erschließt das Verfahren einen Weg zur rationellen Herstellung von Vielfachelektroden mit unterschiedlichen Katalysatoren.

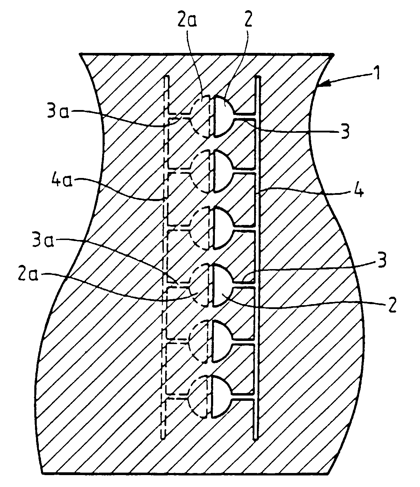

Im folgenden wird ein Ausführungsbeispiel der Erfindung anhand einer Zeichnung näher beschrieben. In der Zeichnung ist eine Strukturierungsmaske (Draufsicht) dargestellt.

Die Strukturierungsmaske besteht aus einem dünnen Metallblech 1, in das halbkreisförmige Aussparungen 2, stegförmige Durchbrüche 3 und ein durchgehender Schlitz 4 gestanzt sind. Die stegförmigen Durchbrüche 3 sind mit dem durchgehenden Schlitz 4 verbunden. Die Aussparungen 2 entsprechen den gewünschten Elektrodenformen. Die zur Herstellung der Gasdiffusionselektrode verwendete gasdurchlässige Membran, z.B. eine PTFE-Folie wird anschließend mit der Strukturierungsmaske 1 abgedeckt und in eine Vakuumapparatur gebracht. Die Membran wird dann durch die Aussparungen 2, 3 und 4 hindurch mit einer leitfähigen Schicht, z.B. mit Gold bedampft. Anstelle einer Bedampfung kann die leitfähige Schicht auch durch Sputtern aufgebracht werden. Auf diese Weise erhält man ein entsprechend den Aussparungen strukturiertes, leitfähiges Elektrodenmuster auf der Membran. Danach wird die Strukturierungsmaske entfernt und die Membran mit dem Elektrodenmuster in ein Elektrolysebad gebracht. Das Elektrolysebad besteht z.B. aus einer wäßrigen H₂PtCl₆-Lösung. Über die den Durchbrüchen 3 und 4 entsprechenden Anschlußstege wird im Elektrolysebad eine negative elektrische Spannung angelegt, so daß eine kathodische Abscheidung von Platin erfolgt. Die Elektrolysestromstärke liegt dabei im Bereich von 10 µA bis 100 µA. Auf diese Weise werden alle goldbedampften Stellen der Membran, die den Aussparungen 2 und den Durchbrüchen 3 und 4 entsprechen, galvanisch mit Platin als Katalysator beschichtet.

Zur Herstellung von runden Elektroden, die aus zwei Hälften bestehen, kann die Membran erneut mit der Strukturierungsmaske 1 abgedeckt werden, wobei die Maske wie in der Zeichnung angedeutet um 180° gedreht (Oberseite und Unterseite vertauscht) auf die Membran gelegt wird, so daß nunmehr die gestrichelt gezeichneten Aussparungen 2a, 3a, 4a für eine Bedampfung zugänglich sind. Man erhält dann ein von dem ersten Elektrodenmuster räumlich und elektrisch getrenntes, spiegelbildlich angeordnetes Elektrodenmuster, wobei die den Aussparungen 2 und 2a entsprechenden halbkreisförmigen Teilelektroden durch einen schmalen Steg isoliert sind. Es besteht nun die Möglichkeit, durch ein Elektrolysebad mit anderer Zusammensetzung die im zweiten Bedampfungsschritt hergestellten, den Aussparungen 2a entsprechenden Elektrodenfelder mit einem anderen Katalysator galvanisch zu beschichten. Auf diese Weise können elektrisch getrennte Teilelektroden rationell und unter relativ einfachen Produktionsbedingungen hergestellt werden. Dies gilt insbesondere für 3-und Mehrelektrodensensoren, wobei diese Fertigungstechnik erlaubt, derartige Sensoren entweder deutlich zu verkleinern oder auch weit mehr zu unterteilen, als es eine manuelle Fertigung zulassen würde.

Die Membran mit dem so hergestellten katalytisch wirksamen Elektrodenmuster wird abschließend durch Benetzung mit einer Polymerdispersion, z.B. einer Teflondispersion und nachfolgender Trocknung, hydrophobisiert. Von dieser Art der Hydrophobisierung wird auch bei den bekannten mechanischen Methoden zur Herstellung von Gasdiffusionselektroden Gebrauch gemacht. Die Hydrophobierung der katalytisch aktiven Schicht ist erforderlich, um zu verhindern, daß die Gasdiffusionselektrode nach dem Einbau in einen elektrochemischen Sensor nicht von dem Elektrolyt überflutet wird. In diesem Fall könnte sich die für den Gasumsatz und damit die für den elektrochemischen Nachweis der zu messenden Gaskomponente verantwortliche 3-Phasengrenze nicht mehr ausbilden. Als letzter Schritt werden die fertigen Einzelelektroden aus der Membran ausgestanzt.

Durch die elektrochemische Abscheidung der katalytisch aktiven Schicht auf der Membran wird einerseits der Verbrauch von Katalysatormaterial reduziert und andererseits eine gleichmäßigere Beschichtung und damit eine geringere Exemplarstreuung (höhere Reproduzierbarkeit) erreicht. Da der abzuscheidende Katalysator in der Lösung ionisiert ist und durch Anlegen der Spannung galvanisch abgeschieden wird, können definierte Herstellungsbedingungen für die Elektroden eingehalten werden. Im Gegensatz dazu hat die bisher übliche manuelle, mechanische Beschichtung einer Elektrode mit Katalysatorpulver, z.B. mit Platinmohr den Nachteil, daß die physikalischen Eigenschaften der Elektroden häufig in nichtreproduzierbarer Weise von der Beschaffenheit des Platinmohr und der Art seiner Herstellung abhängen. Die Kombination von Bedampfung durch Masken und elektrolytischer Abscheidung erlaubt in Analogie zur Miniaturisierung in der Halbleitertechnik ferner eine deutliche Verkleinerung der Elektrodenflächen. Damit kann auch die für einen Sensor erforderliche Menge an Katalysatormaterial und an Elektrolyt erheblich verringert werden.

## Patentansprüche

1. Verfahren zur Herstellung katalytisch wirksamer Gasdiffusionselektroden für elektrochemische Zellen, bei dem eine gasdurchlässige Membran mit einem Katalysator beschichtet wird, dadurch gekennzeichnet,
a) daß die Membran mit einer Strukturierungsmaske (1) abgedeckt wird, die entsprechend den vorgesehenen Elektrodenflächen mit Aussparungen (2, 3, 4) versehen ist
b) daß durch Verdampfung oder Kathodenzerstäubung (Sputtern) einer leitfähigen Substanz im Vakuum ein entsprechend den Aussparungen (2, 3, 4) strukturiertes leitfähiges Elektrodenmuster auf der Membran erzeugt wird,
c) daß das leitfähige Elektrodenmuster auf der Membran galvanisch mit dem Katalysator beschichtet wird und
d) daß das galvanisch abgeschiedene, katalytisch wirksame Elektrodenmuster anschließend hydrophobisiert wird.

2. Verfahren nach Anspruch 1, dadurch gekennzeichnet, daß die Hydrophobisierung des katalytisch wirksamen Elektrodenmusters durch Auftragen und anschließendes Trocknen einer Polymerdispersion erfolgt.

3. Verfahren nach Anspruch 1 bis 2, dadurch gekennzeichnet, daß verschiedene Teilelektrodenflächen des Elektrodenmusters mit verschiedenen Katalysatoren galvanisch beschichtet werden.

## Claims

1. A process for manufacturing catalytically active gas diffusion electrodes for electrochemical cells in which a gas permeable membrane is coated with a catalyst, characterized by
a) covering the membrane with a structuring mask (1) which has openings or cutouts (2, 3, 4) corresponding to planned electrode areas;
b) producing a conductive electrode pattern on the membrane corresponding to the openings (2, 3, 4) using vapor deposition or cathode sputtering (sputtering) of a conductive substance in a vacuum;
c) galvanically coating the conductive electrode pattern on the membrane with the catalyst; and
d) making the galvanically deposited, catalytically active electrode pattern hydrophobic.

2. A process as defined in claim 1, characterized in that the step of making the catalytically active electrode pattern hydrophobic is achieved by applying and subsequently drying a polymer dispersion.

3. A process as defined in claim 1 or 2, characterized by galvanically coating various partial electrode surfaces of the electrode pattern with various catalysts.

## Revendications

1. Procédé de fabrication d'une électrode catalytiquement active à diffusion gazeuse pour des cellules électrochimiques, dans lequel une membrane perméable aux gaz est recouverte d'un catalyseur, caractérisé en ce que
a) la membrane est recouverte d'un masque de structuration (1) qui est muni d'ouvertures (2, 3, 4) correspondant aux surfaces d'électrode prévues,
b) un motif d'électrode conducteur structuré est réalisé sur la membrane en correspondance avec les ouvertures (2, 3, 4) par vaporisation ou pulvérisation cathodique ("sputtering") sous vide d'une substance conductrice,
c) le motif d'électrode conducteur sur la membrane est recouvert galvaniquement par le catalyseur, et
d) le motif d'électrode catalytiquement actif, recouvert galvaniquement, est ensuite rendu hydrophobe.

2. Procédé selon la revendication 1, caractérisé en ce que le traitement pour rendre hydrophobe le motif d'électrode catalytiquement actif consiste à transférer et ensuite assécher une émulsion polymère.

3. Procédé selon la revendication 1 ou 2, caractérisé en ce que différentes surfaces partielles d'électrode du motif d'électrode sont recouvertes galvaniquement de différents catalyseurs.
